# EUROPEAN PATENT APPLICATION

(11) **EP 4 260 948 A1**
(43) Date of publication of application: **18.10.2023**
(21) Application number: 22712784.2
(22) Date of filing: 24.02.2022
(51) Int. Cl.: B05C 5/02, B29C 48/25

(54) **COATING DIE HEAD AND COATING DEVICE**

(71) Applicant: SHENZHEN MANST TECHNOLOGY CO., LTD., Shenzhen, Guangdong 518118 (CN)
(72) Inventor: The designation of the inventor has not yet been filed
(74) Representative: J A Kemp LLP
(86) International application number: PCT/CN2022/077754
(87) International publication number: WO 2023/159437

(57) **Abstract**

Disclosed are a coating die and coating equipment. The coating die comprises an upper die and a lower die, wherein a coating slot is formed between the upper die and the lower die, and the coating slot is configured for slurry circulation; in both the upper die and the lower die, a slot-forming surface for forming the coating slot is made of a ceramic material. According to the coating die provided by the present application, the slot-forming surface for forming the coating slot is made of the ceramic material, so that the wear resistance and corrosion resistance of the slot-forming surface for forming the coating slot are greatly improved in the coating process of slurry; and even if a small amount of ceramic material is worn and enters the slurry, the performance of the battery pole piece will not be affected, so that the yield of the finished battery pole piece is ensured.

## Description

### TECHNICAL FIELD

The present application relates to the technical field of coating equipment, in particular to a coating die and coating equipment.

### BACKGROUD

Slot extrusion coating is a precise wet coating technology, and the working principle thereof is that slurry is extruded and ejected along the gap of the coating die under a certain pressure and a certain flow rate and transferred to the substrate. Compared with other coating manners, slot extrusion coating has the advantages of being high in coating speed, high in precision and uniform in wet thickness. However, in the coating process of existing coating equipment, a coated positive electrode piece or negative electrode piece is not uniform in thickness, so that the use requirements cannot be met, and the yield is reduced.

### SUMMARY

Therefore, the technical problem to be solved by the present application is that when the coating equipment in the prior art is used for coating, a coated positive electrode piece or negative electrode piece is not uniform in thickness, so that the use requirements cannot be met, and the yield is reduced.

Through a large number of experiments, it is found that the reason why a coated battery electrode piece is not uniform in thickness is that positive electrode slurry and negative electrode slurry are each a suspension composed of solid particles with certain hardness, size and irregular shape, an organic solvent, a polymer binder and the like. In the coating process, the slurry is continuously extruded from a coating slot and a lip under the action of chamber pressure, and under the combined action of the slurry and a roller, the solid particles in the slurry form scouring and wear on a channel surface of the coating slot and the lip, so that the performance indexes of the channel surface and the lip of a coating die are affected, and thus the coating effect is affected; in addition, the metal on the die lip and the channel surface of the coating slot may be mixed into the slurry, so that the slurry and the performance of the battery electrode piece are influenced.

Therefore, the present application provides a coating die, comprising:
an upper die and a lower die, wherein a coating slot is formed between the upper die and the lower die, and the coating slot is configured for slurry circulation;
in both the upper die and the lower die, a slot-forming face for forming the coating slot is made of a ceramic material.

Optionally, in the coating die, the ceramic material is a metallic ceramic material or a non-metallic ceramic material.

Optionally, in the coating die, the metallic ceramic material is one selected from oxide-based metallic ceramic, carbide-based metallic ceramic, nitride-based metallic ceramic, boride-based metallic ceramic and silicide-based metallic ceramic.

Optionally, in the coating die, the non-metallic material is silicon oxide or silicon carbide. Optionally, in the coating die, both the upper die and the lower die are of an integrated structure made of a ceramic material.

Optionally, in the coating die, at least one of the upper die and the lower die comprises:
a ceramic component and a supporting shell that are fixedly connected, wherein a side, away from the supporting shell, of the ceramic component is a slot-forming face.

Optionally, in the coating die, the supporting shell is provided with a supporting groove, and the ceramic component is installed in the supporting groove; or
both the supporting shell and the ceramic component are of a flat plate structure, and a plate face of the ceramic component is connected with a plate face of the supporting shell.

Optionally, the coating die further comprises a supporting piece, wherein the supporting piece is arranged inside a mounting part of the ceramic component in a position-limiting manner, and the supporting piece is connected with the supporting shell through a connector.

Optionally, in the coating die, the lower die further comprises a buffer chamber, the lower die is provided with a circulation channel communicating with the buffer chamber, and the circulation channel communicates with an external feedstock source.

Optionally, the coating die further comprises a glue dispensing valve, the glue dispensing valve is arranged on the upper die, one end of the glue dispensing valve is configured to be connected with a glue supply system, and an output end of the glue dispensing valve communicates with the coating slot through a glue dispensing channel of the upper die.

Optionally, the coating die further comprises an adjusting mechanism, wherein the adjusting mechanism comprises a driving piece and an adjusting piece, a mounting end of the driving piece is mounted on the upper die, the adjusting piece is connected with an output end of the driving piece, and an adjusting part of the adjusting piece is configured to extend into the coating slot, and the driving piece drives the adjusting piece to extend and retract so as to adjust the flow rate of slurry in the coating slot.

Optionally, in the coating die, the driving piece moves in a first direction, the adjusting piece moves in a second direction, and an intersection angle is formed between the first direction and the second direction;
the adjusting mechanism further comprises a direction-conversion assembly, the direction-conversion assembly is arranged between the driving piece and the adjusting piece, and the direction-conversion assembly is configured to convert the direction of the action force of the driving piece acting on the adjusting piece.

Optionally, the coating die further comprises at least one middle die which is arranged between the upper die and the lower die.

Optionally, according to the coating die, the middle die is made of a ceramic material.

The present application further comprises coating equipment, comprising the coating die mentioned above.

The technical solution provided by the present application has the following advantages:
according to the coating die provided by the present application, the slot-forming surface for forming the coating slot is made of the ceramic material, so that the wear resistance and corrosion resistance of the slot-forming surface for forming the coating slot are greatly improved in the coating process of slurry; even if a small number of ceramic material is worn and enters the slurry, the influence on the slurry is very small, so that the performance of the battery electrode piece will not be affected, and the coated battery electrode piece can be uniform in thickness, and thus the yield of the finished battery electrode piece is ensured.

### BRIEF DESCRIPTION OF THE DRAWINGS

In order to more clearly illustrate the specific implementations of the present application or the technical solutions in the prior art, the accompanying drawings required in the description of the specific implementations or the prior art will be briefly introduced below. Obviously, the drawings that will be described below are some implementations of the present application. For those of ordinary skill in the art, other drawings can also be obtained from these drawings without creative work.
Fig. 1 is a structural schematic diagram of a coating die provided in embodiment 2 of the present application;
Fig. 2 is an exploded view of a lower die in Fig. 1;
Fig. 3 is a side sectional view of Fig. 1;
Fig. 4 is a structural schematic diagram of a coating die provided in embodiment 3 of the present application;
Fig. 5 is a structural schematic diagram of another coating die provided in embodiment 3 of the present application;
Fig. 6 is a structural schematic diagram of an adjusting mechanism in a coating die provided in embodiment 5 of the present application;
Fig. 7 is a structural schematic diagram of the adjusting mechanism with a housing removed in the coating die provided in embodiment 5 of the present application;
Fig. 8 is a structural schematic diagram of cooperation among a sliding piece, a cam body and a crossed-roller guide rail in the coating die provided in embodiment 5 of the present application;
Fig. 9 is a structural schematic diagram of a coating die provided in embodiment 6 of the present application;
Fig. 10 is a side sectional view of Fig. 9;
Fig. 11 is a structural schematic diagram of another coating die provided in embodiment 6 of the present application; and
Fig. 12 is a side sectional view of Fig. 11;
description of reference signs:
1-upper die; 11-first ceramic component; 12-first supporting shell;
2-lower die; 21-second ceramic component; 22-second supporting shell; 23-buffer chamber; 24-circulation channel;
3-glue dispensing valve;
4-adjusting mechanism; 41-driving piece; 411-output shaft; 42-adjusting piece; 421-rod body; 422-intercepting block;
43-direction-conversion assembly; 431-cam seat; 432-sliding piece; 433-cam body; 434-crossed-roller guide rail;
44-coupling;
45-control board;
5-middle die.

### DETAILED DESCRIPTION

The technical solutions of the present application will be clearly and completely described below with reference to the accompanying drawings. Obviously, the described embodiments are part of the embodiments of the present application, but not all of the embodiments. Based on the embodiments in the present application, all other embodiments obtained by those of ordinary skill in the art without creative work fall within the protection scope of the present application. In the description of the present application, it should be noted that the terms "center", "upper", "lower", "left", "right", "vertical", "horizontal", "inner", "outer", etc. for indicating orientation or positional relationship are based on the orientation or positional relationship shown in the accompanying drawings, which is only for the convenience of describing the present application and simplifying the description, rather than indicating or implying that the device or element referred to must have a specific orientation or be constructed or operated at a specific orientation, and therefore should not be construed as limitations on the present application. Furthermore, the terms "first", "second" and "third" are used for descriptive purposes only and should not be construed to indicate or imply relative importance.

In the description of the present application, it should be noted that, unless otherwise expressly specified and limited, the terms "installed", "connected" and "connection" should be understood in a broad sense, for example, connection can be fixed connection, or detachable connection, or integrated connection, can be mechanical connection, and can also be electrical connection, and can be direct connection, can also be indirect connection through an intermediate medium, and can be internal communication between two elements. For those of ordinary skill in the art, the specific meanings of the above terms in the present application can be understood in specific situations.

In addition, the technical features involved in the different implementations of the present application described below can be combined with each other as long as they do not conflict with each other.

### Embodiment 1

This embodiment provides a coating die which comprises an upper die 1 and a lower die 2, wherein a coating slot is formed between the upper die 1 and the lower die 2, and the coating slot is configured for slurry circulation; in both the upper die 1 and the lower die 2, a slot-forming face for forming the coating slot is made of a ceramic material. In this embodiment, both the upper die 1 and the lower die 2 are of an integrated structure. That is, both the upper die 1 and the lower die 2 are made of a ceramic material.

According to the coating die provided by the present application, the slot-forming surface for forming the coating slot is made of the ceramic material, so that the wear resistance and corrosion resistance of the slot-forming surface for forming the coating slot are greatly improved in the coating process of slurry; and even if a small amount of ceramic material is worn and enters the slurry, the influence on the slurry is very small, so that the performance of the battery electrode piece will not be affected, and thus the yield of the finished battery electrode piece is effectively ensured. In addition, both the upper die and the lower die are set to be of an integrated structure, so that the integration of the integrated structure is further improved, meanwhile, both the upper die and the lower die in this embodiment are of an integrated structure made of a ceramic material, at this moment, even if surfaces of the upper die and the lower die are worn, the situation that metal materials are exposed due to the fact that materials on the surface of the coating die fall off can be avoided, and the situations that the yield of the coated battery electrode piece is reduced and the like can be avoided since the integral materials of the upper die and the lower die are ceramic materials.

In this embodiment, the ceramic material is a metallic ceramic material, and specifically, the metallic ceramic material is one selected from oxide-based metallic ceramic, carbide-based metallic ceramic, nitride-based metallic ceramic, boride-based metallic ceramic and silicide-based metallic ceramic.

When the oxide-based metallic ceramic is selected, the oxide-based metallic ceramic is formed by taking aluminum oxide, zirconium oxide, magnesium oxide, beryllium oxide or the like as a matrix which is compounded with metal tungsten, chromium or cobalt, so that the oxide-based metallic ceramic has the characteristics of high temperature resistance, chemical corrosion resistance, good thermal conductivity, high mechanical strength and the like.

When the carbide-based metallic ceramic is selected, the carbide-based metallic ceramic is formed by taking titanium carbide, silicon carbide, tungsten carbide or the like as a matrix which is compounded with metals such as metal cobalt, nickel, chromium, tungsten and molybdenum, so that the carbide-based metallic ceramic has the characteristics of high hardness, high wear resistance, high temperature resistance and the like.

When the nitride-based metallic ceramic is selected, titanium nitride, boron nitride, silicon nitride and tantalum nitride are used as matrixes, and the nitride-based metallic ceramic has super-hardness, thermal shock resistance and good high-temperature creep property.

When the boride-based metallic ceramic is selected, the boride-based metallic ceramic is formed by taking titanium boride, tantalum boride, vanadium boride, chromium boride, zirconium boride, tungsten boride, molybdenum boride, niobium boride, hafnium boride or the like as a matrix which is compounded with part of metal materials.

When the silicide-based metallic ceramic is selected, the silicide-based metallic ceramic is formed by taking manganese silicide, iron silicide, cobalt silicide, nickel silicide, titanium silicide, zirconium silicide, niobium silicide, vanadium silicide, niobium silicide, tantalum silicide, molybdenum silicide, tungsten silicide, barium silicide or the like as a matrix which is compounded with part of or trace of metal materials. Certainly, selecting what kind of ceramic material to manufacture the coating die only depends on specific conditions.

Certainly, in optional implementations, a non-metallic ceramic material can also be selected, and the non-metallic material is silicon oxide or silicon carbide.

### Embodiment 2

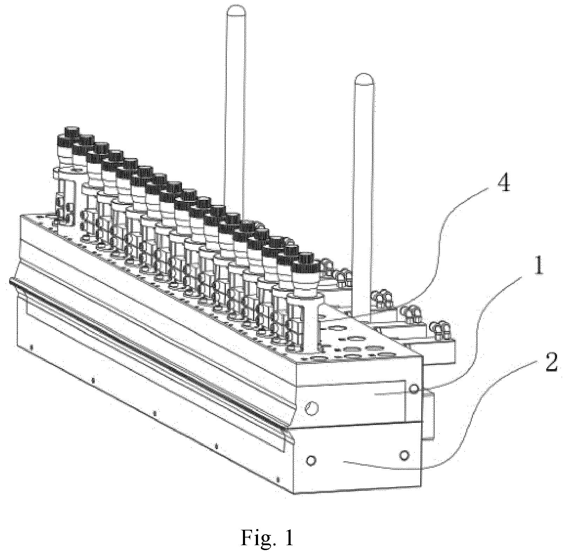

This embodiment provides a coating die, as shown in Fig. 1 to Fig. 3, the coating die comprises an upper die 1 and a lower die 2, a coating slot is formed between the upper die 1 and the lower die 2, and the coating slot is configured for slurry circulation; in both the upper die 1 and the lower die 2, a slot-forming face for forming the coating slot is made of a ceramic material. Embodiment 2 differs from embodiment 1 in that:
at least one of the upper die 1 and the lower die 2 comprises a ceramic component and a supporting shell, the ceramic component is fixedly connected with the supporting shell, and the side, away from the supporting shell, of the ceramic component is a slot-forming face. In this embodiment, both the upper die 1 and the lower die 2 are formed by piece-assembling a metal material and a ceramic material. Specifically, the supporting shell is made of a metal material.

Specifically, the upper die 1 is provided with a first supporting shell and a first ceramic component 11, the first supporting shell 12 is provided with a first supporting groove, and the first ceramic component 11 is installed in the first supporting groove. Specifically, the section of the first supporting shell is in an L shape, and the first ceramic component 11 is fixedly installed in the L-shaped first supporting groove.

The lower die 2 is provided with a second supporting shell and a second ceramic component 21, the second supporting shell 22 is provided with a second supporting groove, and the second ceramic component 21 is installed in the second supporting groove. For example, the second supporting groove is an open groove, and the second ceramic component 21 is clamped in the open groove.

According to the coating die, both the upper die and the lower die are of a split structure, even if the surface of the ceramic component is worn, the situation that metal materials are exposed due to wear of materials on the surface of the coating die can be effectively avoided due to the fact that the whole structure of the ceramic component is made of a ceramic material, so that the yield of the coated battery electrode piece is further ensured.

Certainly, the shape of the supporting groove can be selected according to specific conditions, such as a V shape or other irregular shapes, the selection basis can be adjusted according to use purposes and installation convenience, and it needs to be guaranteed that connection between the supporting shell and the ceramic component is reliable.

In this embodiment, during mounting of the ceramic component and the supporting shell, the coating die further comprises a supporting piece, the supporting piece is arranged inside a mounting part of the ceramic component in a position-limiting manner, and the supporting piece is connected with the supporting shell through a connector. The material of the supporting piece is the same as that of the supporting shell. Specifically, the supporting piece can be a metal block, the connector can be a bolt, the mounting part of the ceramic component can be a mounting groove matched with the metal block, and the metal block is mounted in the mounting groove; the metal block is provided with a threaded hole, and the metal shell and the metal block are directly connected by the bolt. For example, in this embodiment, the metal block adopts a square block, and the mounting groove adopts a square groove structure.

According to the coating die with the structure, by the arrangement of the mounting part of the ceramic component, as well as the matched mounting of the supporting piece and the mounting part, a threaded hole is prevented from being directly formed in the ceramic component, whereas if the threaded hole is directly formed in the ceramic component, the problem that the capacity of ceramic of being locally stressed is weak will occur, and further the phenomenon that the ceramic body is easy to crack is caused; therefore, according to the piece-assembling manner of the ceramic component and the supporting shell, the piece-assembling reliability is realized while the piece-assembling of the ceramic component and the supporting shell is ensured.

The lower die 2 further comprises a buffer chamber 23, the lower die 2 is provided with a circulation channel 24 communicating with the buffer chamber 23, and the circulation channel 24 is adapted to communicate with an external feedstock source.

Specifically, in this embodiment, the buffer chamber 23 is arranged on the ceramic component, the supporting shell is provided with the circulation channel 24 communicating with the buffer chamber 23, and the circulation channel 24 is configured to communicate with an external feedstock source.

Specifically, in this embodiment, the upper die 1 is further provided with a glue dispensing valve 3, the glue dispensing valve 3 is externally connected with a glue supply system, the output end of the glue dispensing valve 3 is connected with a glue dispensing channel in the upper die 1, and the glue dispensing valve 3 controls glue to flow into the edge of the coating slot through the glue dispensing channel, so that the slurry coating is glued at an edge thereof. As other alternative implementations of this embodiment, the upper die 1 can be formed from a ceramic material alone, and the lower die 2 is formed by piece-assembling a metal material and a ceramic material; similarly, the lower die 2 can be formed from a ceramic material alone, and the upper die 1 is formed by piece-assembling a metal material and a ceramic material; by means of the two optional implementations, it can also be guaranteed that the slot-forming face for forming the coating slot is made of a ceramic material.

### Embodiment 3

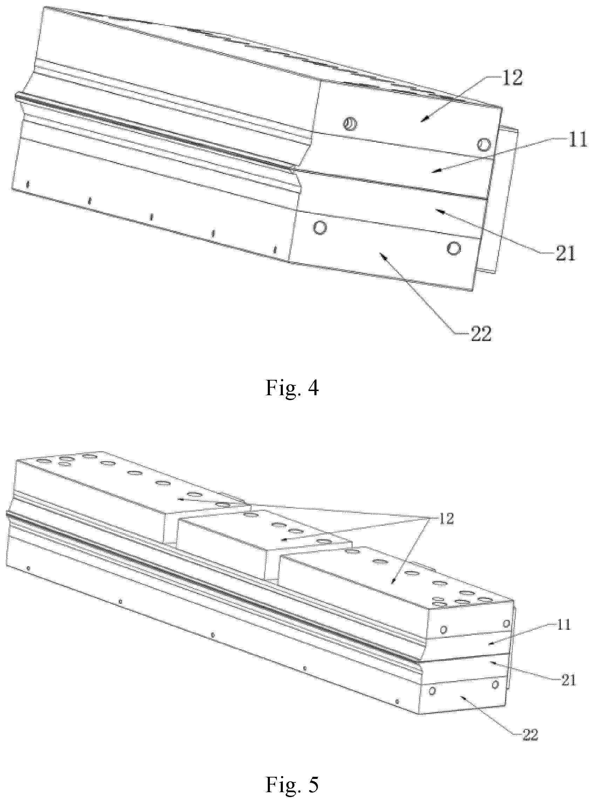

This embodiment provides a coating die, which is different from the coating die in embodiment 2 in that, in the coating die in this embodiment, as shown in Fig. 4 and Fig. 5, both the supporting shell and the ceramic component are of a flat plate structure, and a plate face of the ceramic component is connected with a plate face of the supporting shell. Due to the adoption of the setting manner of the flat plate structure, direct piece-assembling of the supporting shell and the ceramic component is realized, and the cutting amount of the die is reduced. Specifically, in this embodiment, the supporting shell is a metal plate, and as shown in Fig. 4, the metal plate can be manufactured by integral forming. Certainly, as shown in Fig. 5, the supporting shell can adopt three metal plates as an integral structure, and every two adjacent metal plates are arranged at intervals, so that the ceramic component can be supported as well. The supporting shell and the ceramic component can be connected in the manner in embodiment 2.

### Embodiment 4

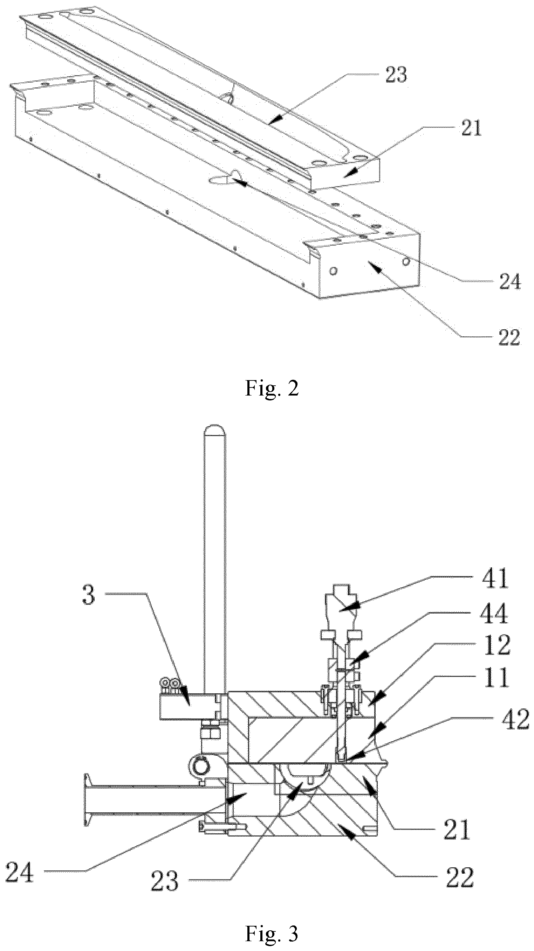

This embodiment provides a coating die, which is different from the coating die provided by any one of embodiments 1-3 in that,
as shown in Fig. 1 and Fig. 3, the coating die provided by this embodiment further comprises an adjusting mechanism 4, wherein the adjusting mechanism 4 comprises a driving piece 41 and an adjusting piece 42, a mounting end of the driving piece 41 is mounted on the upper die 1, the adjusting piece 42 is connected with an output end of the driving piece 41, an adjusting part of the adjusting piece 42 extends into the coating slot, and the driving piece 41 drives the adjusting piece 42 to extend and retract so as to adjust the flow rate of slurry in the coating slot. In this embodiment, the adjusting mechanism 4 adopts the manner that the driving piece 41 and the adjusting piece 42 cooperate with each other, the position of the adjusting piece 42 is adjusted through the driving piece 41, and the adjusting piece 42 extends into the coating slot, and the flow rate of slurry in the coating slot is adjusted by adjusting the adjusting piece 42.

The driving piece 41 in this embodiment can be a micro linear motor, the output end of the driving piece 41 is an output shaft 411, the driving piece 41 is installed on the side, away from the lower die 2, of the upper die 1, the driving piece 41 is controlled by a control part, and the control part is a control board 45. The adjusting piece 42 comprises a connecting arm and an intercepting block 422, the connecting arm penetrates through the upper die 1 and is connected with the output shaft 411 through a coupling 44, and the intercepting block 422 is an adjusting part. The upper die 1 is provided with an accommodating groove which is configured for accommodating the intercepting block 422 of the adjusting piece 42.

As another alternative implementation of this embodiment, the first adjusting mechanism can drive the adjusting piece through a power transmission piece, specifically, the power transmission piece is a micrometer head, and the output end of the micrometer head is connected with the adjusting piece through a coupling. By manually rotating the micrometer head, the adjusting piece can extend into the coating slot, and then the adjusting piece can adjust the flow rate in the coating slot in an intercepting manner.

### Embodiment 5

This embodiment provides a coating die, which is different from the coating die provided in embodiment 4 in that,
the driving piece moves in a first direction, the adjusting piece moves in a second direction, and an intersection angle is formed between the first direction and the second direction. Specifically, an intersection angle of 90 degrees is formed between the driving piece and the adjusting piece.

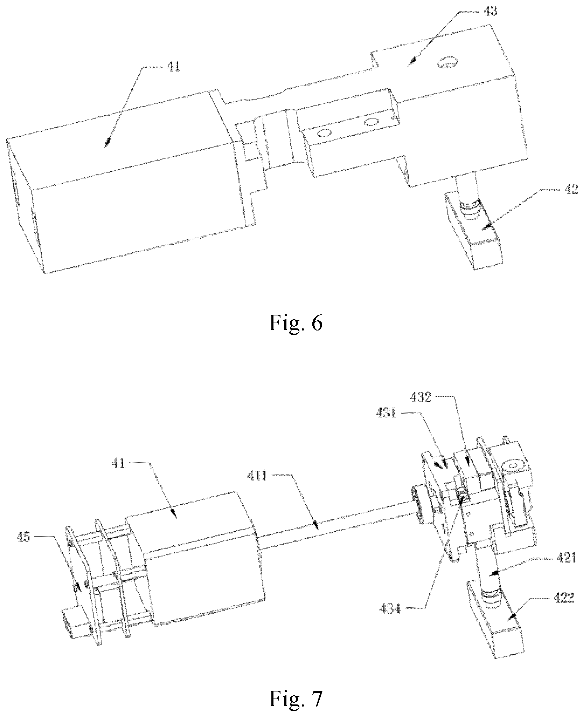

As shown in Fig. 6 to Fig. 8, the adjusting mechanism 4 further comprises a direction-conversion assembly 43 which is arranged between the driving piece and the adjusting piece, and the direction-conversion assembly is configured to convert the direction of the action force of the driving piece acting on the adjusting piece.

According to the coating die provided by this embodiment, the direction-conversion assembly 43 is a cam assembly, and the cam assembly comprises a cam seat 431, a sliding piece 432 and a cam body 433. Wherein the sliding piece 432 is slidably arranged on the cam seat 431, and the sliding piece 432 is connected with the adjusting piece 42; the cam body 433 is rotatably embedded in the sliding piece 432, and the cam body 433 is fixed to the output end of the driving piece 41. Specifically, a motor is selected as the driving piece 41, the output end of the motor is an output shaft 411, when the output shaft 411 of the motor rotates, the cam body 433 can be driven to rotate, and when the cam body 433 rotates, the sliding part 432 is further driven to reciprocate in the cam seat 431.

Therefore, the sliding piece 432 can reciprocate on the cam seat 431, and the sliding piece 432 drives the adjusting piece 42 to move in the height direction of the coating die so as to adjust the surface density of coating. The movement smoothness of the adjusting piece 42 is improved, and the coating uniformity is improved.

In this embodiment, the cam seat 431 can be provided with a sliding groove, and the sliding piece 432 is slidably connected with the cam seat 431 through the sliding groove. For example, a crossed-roller guide rail 434 can also be arranged between the cam seat 431 and the sliding piece 432, and the crossed-roller guide rail 434 is adopted, so that the sliding piece 432 can slide more smoothly.

In this embodiment, the adjusting piece 42 can be of a block-shaped structure with a T-shaped section, specifically, the adjusting piece 42 comprises a rod body 421 and an intercepting block 422, one end of the rod body 421 is connected with the cam seat 431, the other end of the rod body 421 is fixedly connected with the intercepting block 422, and in this embodiment, the intercepting block 422 and the rod body 421 are integrally formed.

The direction-conversion assembly 43 further comprises a mounting shell, the cam assembly is fixed in the mounting shell, a bearing is further embedded in the mounting shell, an output shaft 411 of the motor penetrates through the bearing and is connected with the cam body 433, and eccentric rotation of the far end of the output shaft 411 of the motor is further limited by additionally arranging the bearing.

According to the coating die provided by this embodiment, when the direction-conversion assembly 43 is additionally arranged on the adjusting mechanism 4, the direction-conversion assembly 43 can convert rotary motion of the driving piece 41 into linear motion, the driving piece 41 is not limited by the driven direction of the adjusting piece 42, and the driving piece 41 can be selectively arranged along the width direction or the length direction of the upper die 1 according to requirements, so that the space occupied by the flow adjusting mechanism 4 in the height direction of the whole machine is reduced, which facilitates packaging and transferring, and can avoid damage caused by collision.

### Embodiment 6

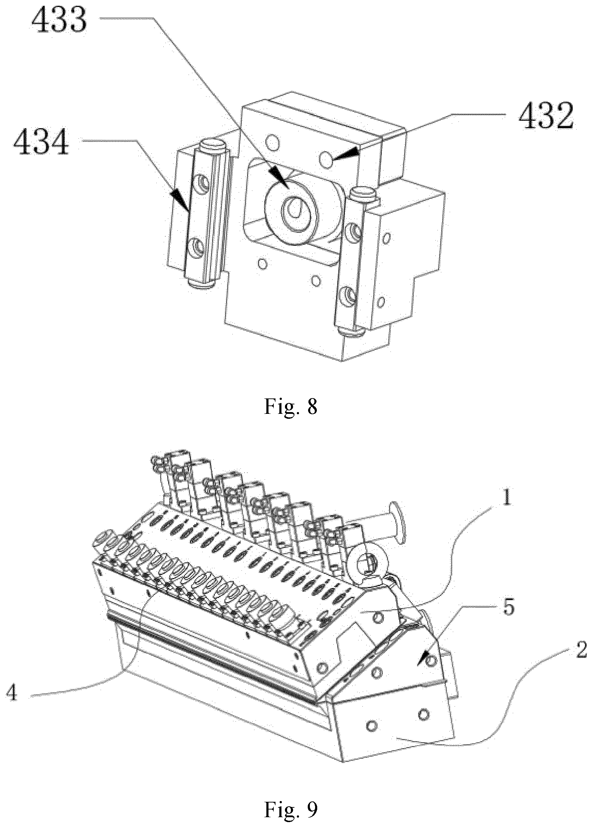

This embodiment provides a coating die, which is different from the coating die provided by any one of embodiments 1-5 in that,
the coating die provided by this embodiment also comprises a middle die 5, and as shown in Fig. 9 to Fig. 12, the middle die 5 is arranged between the upper die 1 and the lower die 2. A first coating slot is formed between the middle die 5 and the upper die 1, and a second coating slot is formed between the middle die 5 and the lower die 2; the middle die 5 in this embodiment is made of a ceramic material. Through the arrangement of the middle die 5, the double-layer coating of the die is realized.

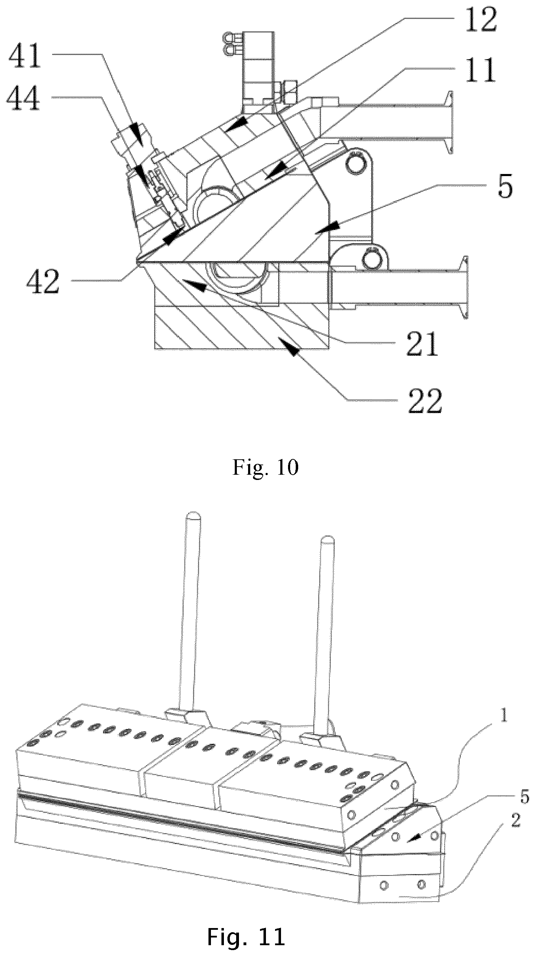

Specifically, Fig. 9 and Fig. 10 show the piece-assembling manner of the ceramic component and the supporting shell corresponding to embodiment 2, wherein the upper die 1 is provided with a first supporting shell 12 and a first ceramic component 11, the first supporting shell 12 is provided with a first supporting groove, and the first ceramic component 11 is installed in the first supporting groove. The lower die 2 is provided with a second supporting shell 22 and a second ceramic component 21, the second supporting shell 22 is provided with a second supporting groove, and the second ceramic component 21 is installed in the second supporting groove. For example, the second supporting groove is an open groove, and the second ceramic component 21 is clamped in the open groove.

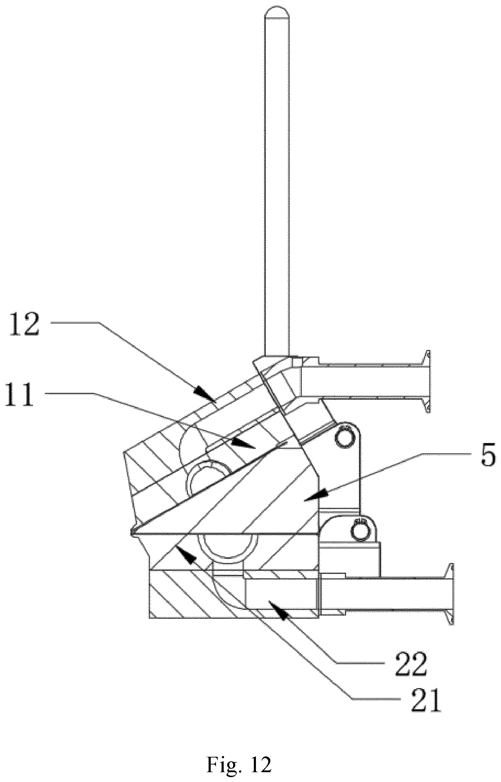

Fig. 11 and Fig. 12 show the piece-assembling manner of the ceramic component and the supporting shell corresponding to embodiment 3.

The middle die 5 is made of a ceramic material, so that the wear resistance and corrosion resistance of the slot-forming surface for forming each coating slot are greatly improved in the coating process of the die; even if a small amount of ceramic material is worn and enters the slurry, the influence on the slurry is very small, and the performance of the battery electrode piece will not be affected, so that the yield of the finished battery electrode piece is ensured.

### Embodiment 7

This embodiment provides coating equipment, comprising the coating die provided in any one of embodiments 1-6.

Obviously, the above embodiments are only examples for clear description, and are not intended to limit the implementations. For those of ordinary skill in the art, changes or modifications in other different forms can also be made on the basis of the above description. There is no need and cannot be exhaustive of all implementations here. However, the obvious changes or changes derived from this are still within the protection scope of the present application.

## Claims

1. A coating die, **characterized by** comprising:
an upper die and a lower die, wherein a coating slot is formed between the upper die and the lower die, and the coating slot is configured for slurry circulation;
in both the upper die and the lower die, a slot-forming face for forming the coating slot is made of a ceramic material.

2. The coating die according to claim 1, **characterized in that**
the ceramic material is a metallic ceramic material or a non-metallic ceramic material.

3. The coating die according to claim 2, **characterized in that**
the metallic ceramic material is one selected from oxide-based metallic ceramic, carbide-based metallic ceramic, nitride-based metallic ceramic, boride-based metallic ceramic and silicide-based metallic ceramic.

4. The coating die according to claim 2, **characterized in that**
the non-metallic material is silicon oxide or silicon carbide.

5. The coating die according to any one of claims 1-4, **characterized in that**
both the upper die and the lower die are of an integrated structure made of a ceramic material.

6. The coating die according to any one of claims 1-4, **characterized in that**
at least one of the upper die and the lower die comprises:
a ceramic component and a supporting shell that are fixedly connected, wherein a side, away from the supporting shell, of the ceramic component is the slot-forming face.

7. The coating die according to claim 6, **characterized in that**
the supporting shell is provided with a supporting groove, and the ceramic component is installed in the supporting groove; or both the supporting shell and the ceramic component are of a flat plate structure, and a plate face of the ceramic component is connected with a plate face of the supporting shell.

8. The coating die according to claim 6, **characterized in that**
the coating die further comprises a supporting piece, wherein the supporting piece is arranged inside a mounting part of the ceramic component in a position-limiting manner, and the supporting piece is connected with the supporting shell through a connector.

9. The coating die according to any one of claims 1-4, **characterized in that**
the lower die further comprises a buffer chamber, the lower die is provided with a circulation channel communicating with the buffer chamber, and the circulation channel communicates with an external feedstock source.

10. The coating die according to any one of claims 1-4, **characterized in that**
the coating die further comprises a glue dispensing valve, wherein the glue dispensing valve is arranged on the upper die, one end of the glue dispensing valve is configured to be connected with a glue supply system, and an output end of the glue dispensing valve communicates with the coating slot through a glue dispensing channel of the upper die.

11. The coating die according to any one of claims 1-4, **characterized in that**
the coating die further comprises an adjusting mechanism, wherein the adjusting mechanism comprises a driving piece and an adjusting piece, a mounting end of the driving piece is mounted on the upper die, the adjusting piece is connected with an output end of the driving piece, and an adjusting part of the adjusting piece is configured to extend into the coating slot, and the driving piece drives the adjusting piece to extend and retract so as to adjust the flow rate of slurry in the coating slot.

12. The coating die according to claim 11, **characterized in that**
the driving piece moves in a first direction, the adjusting piece moves in a second direction, and an intersection angle is formed between the first direction and the second direction;
the adjusting mechanism further comprises a direction-conversion assembly, the direction-conversion assembly is arranged between the driving piece and the adjusting piece, and the direction-conversion assembly is configured to convert the direction of the action force of the driving piece acting on the adjusting piece.

13. The coating die according to any one of claims 1-4, **characterized in that**
the coating die further comprises at least one middle die which is arranged between the upper die and the lower die.

14. The coating die according to claim 13, **characterized in that** the middle die is made of a ceramic material.

15. Coating equipment, **characterized by** comprising the coating die according to any one of claims 1-14.
